# EUROPEAN PATENT SPECIFICATION

(11) **EP 4 265 440 B1**
(45) Date of publication and mention of the grant of the patent: **11.02.2026**
(21) Application number: 21906031.6
(22) Date of filing: 23.06.2021
(51) Int. Cl.: B60C 11/03, B60C 11/13

(54) **MOTORCYCLE TIRE**
MOTORRADREIFEN
PNEU DE MOTOCYCLETTE

(30) Priority: 18.12.2020 JP 2020210287
(43) Date of publication of application: 25.10.2023
(73) Proprietor: BRIDGESTONE CORPORATION, Chuo-ku Tokyo 104-8340 (JP)
(72) Inventor: YAMASHITA, Norimasa, Tokyo 104-8340 (JP)
(74) Representative: Marks & Clerk LLP
(86) International application number: PCT/JP2021/023707
(87) International publication number: WO 2022/130664

(56) References cited:
- JP-A- 2004 351 956
- JP-A- 2007 131 111
- JP-A- 2007 131 111
- JP-A- 2008 254 573
- JP-A- 2010 023 585
- JP-A- 2012 011 953
- JP-A- 2016 033 013
- JP-A- 2016 150 627
- JP-A- 2016 150 627
- JP-A- 2020 179 781
- JP-A- H0 245 205
- JP-A- H0 274 405
- JP-A- H0 274 405
- JP-A- H10 181 313
- JP-A- H10 181 313
- JP-A- H11 245 627

## Description

### TECHNICAL FIELD

The present invention relates to a motorcycle tire (hereinafter, also simply referred to as "tire"). More specifically, the present invention relates to a motorcycle tire, particularly a motorcycle pneumatic tire, which relates to an improvement of a tread pattern arranged on a tread ground-contact surface.

### BACKGROUND ART

Motorcycles have a characteristic of making turns by tilting the vehicle body, which is different from four-wheeled vehicles such as passenger cars, trucks, and buses; therefore, motorcycle tires have a shape in which the crown portion has a smaller radius of curvature with a rounder cross-section as compared to four-wheeled vehicle tires. In other words, in a motorcycle tire, a tread central portion mainly comes in contact with the ground during straight running of the motorcycle, while a tread shoulder portion comes in contact with the ground during turning.

As prior art relating to an improvement of tread pattern of a motorcycle tire, for example, Patent Document 1 discloses a technology in which, in a motorcycle tire to be used on rough terrain that includes a tread portion having a tread pattern provided with plural blocks, not only the land ratio of the block pattern and the height of the blocks from the tread bottom but also the shape of the blocks are defined for the purpose of improving the chunking resistance while maintaining traction performance, braking performance, and turning performance over a prolonged period.

Further, Patent Document 2 discloses a technology in which, in a pneumatic tire having a tread portion provided with plural blocks, the shape and the angle of block walls are defined for the purpose of improving the durability of the blocks arranged on the tread surface. This pneumatic tire disclosed in Patent Document 2 is assumed to be a motorcycle tire that is used substantially for running on rough terrain, such as motocross.

Patent Document 3 discloses a motorcycle tire with a block tread pattern for improved gripping force during cornering by forming outer section surfaces of a block inside an outmost block disposed on the outmost surface of the tire.

Patent Document 4 discloses a pneumatic tire with a block tread pattern for traveling a rough terrain. When running on a muddy land or a soft road surface, the section grooves of a pneumatic tire are clogged with mud, and the edge effect of the inner side block of the block is not sustained. The tire disclosed in Patent Document 4 is capable of effectively reducing dirt blockage by providing communication grooves which can effectively suppress mud clogging in the division grooves provided in the block.

Patent Document 5 discloses a pneumatic tire for a motorcycle in which a plurality of blocks is formed on a tread, wherein an angle of a tire circumferential wall surface of the block with respect to a normal line standing on a ground surface is θ, and the tire circumferential direction in the tread central region, the angle θ is 15 ° <θ <30 °, and the interval S measured at the block ground level between adjacent blocks is S and the block height is h. The relationship between the height h and the angle θ is 0.5 <(S-2h · tan θ) / S <0.8. The pneumatic tire of Patent Document 5 provides traction on sandy terrain.

### RELATED ART DOCUMENTS

### PATENT DOCUMENTS

[Patent Document 1] JP 2013-241062A
[Patent Document 2] JP 2007-112396A
[Patent Document 3] JP H02 74405A
[Patent Document 4] JP 2016-150627A
[Patent Document 5] JP H10 181313A

### SUMMARY OF THE INVENTION

### PROBLEMS TO BE SOLVED BY THE INVENTION

As described above, motorcycles make turns by tilting the vehicle body and, therefore, a so-called turning force, which is a force acting to the shoulder side, is generated on the ground-contact surfaces of motorcycle tires during turning; however, a motorcycle tire having a block pattern has had a problem in that blocks on the ground-contact surface are deformed by this turning force, causing uneven wear of the shoulder-side edges of the blocks.

As disclosed in Patent Documents 1 and 2, studies have been conducted on improvement of the shape and the angle of blocks arranged in a tread portion of a motorcycle tire; however, the technologies disclosed in Patent Documents 1 and 2 relate to motorcycle tires typically used for running on rough terrain that is mainly straight running, and neither of these technologies envisions running on a paved road and examined uneven wear of shoulder-side edges of blocks.

In view of the above, an object of the present invention is to provide a technology for inhibiting the occurrence of uneven wear at shoulder-side edges of blocks in a motorcycle tire having a block pattern.

### MEANS FOR SOLVING THE PROBLEMS

The present inventor intensively studied to discover that the above-described problem can be solved by, in a tire having plural blocks arranged on its tread ground-contact surface, forming a chamfered part in an upper end portion of the outer wall surface on the tire width-direction outer side of a middle block arranged in a tread shoulder portion, thereby completing the present invention.

It is noted here that the term "middle block" used herein refers to a block whose outer wall on the tire width-direction outer side is arranged in a tread shoulder portion.

That is, the present invention is a motorcycle tire according to claim 1.

In the tire of the present invention, when the height of the middle block and that of the chamfered part are defined as H1 and h1, respectively, the height h1 is preferably 2/3 or less of the height H1. Further, in the tire of the present invention, among the plural blocks, center blocks positioned on the tire equator preferably have a ratio Lc/Wg, which is a ratio between an average value Lc of the tire-circumferential-direction length measured on the tire equator and an average value Wg of the width of widthwise grooves separating the center blocks measured on the tire equator, of 550% or less.

Still further, in the tire of the present invention, the middle block has a tire-circumferential-direction length Lm in a range of preferably 26 mm to 41 mm, and a tire-width-direction length Wm in a range of preferably 15 mm to 44 mm.

Yet still further, in the tire of the present invention, the upper end portion of the outer wall surface of the middle block has a length L1 in a range of preferably 10 mm to 80 mm.

Moreover, the tire of the present invention preferably has a negative ratio of less than 70%.

In the present invention, unless otherwise specified, various dimensions of the tire each refer to a value measured for the tire fitted to a rim defined by an industrial standard that is valid in the region where the tire is manufactured and used, with the tire being inflated to an internal pressure prescribed in the industrial standard in a load-free state. The "industrial standard" is, for example, JATMA (Japan Automobile Tyre Manufacturers Association) YEAR BOOK in Japan, ETRTO (The European Tyre and Rim Technical Organisation) STANDARD MANUAL in Europe, or TRA (The Tire and Rim Association, Inc.) YEAR BOOK in the U.S.

### EFFECTS OF THE INVENTION

According to the present invention, by adopting the above-described constitution, the occurrence of uneven wear at shoulder-side edges of blocks can be inhibited in a motorcycle tire having a block pattern.

### BRIEF DESCRIPTION OF THE DRAWINGS

FIG. 1 is a partial development view illustrating a tread ground-contact surface of one example of the motorcycle tire of the present invention.
FIG. 2 is a cross-sectional view of a middle block, taken along a line X-X in FIG. 1.
FIG. 3 is a widthwise cross-sectional view illustrating one example of the motorcycle tire of the present invention.

### MODE FOR CARRYING OUT THE INVENTION

Embodiments of the present invention will now be described in detail referring to the drawings.

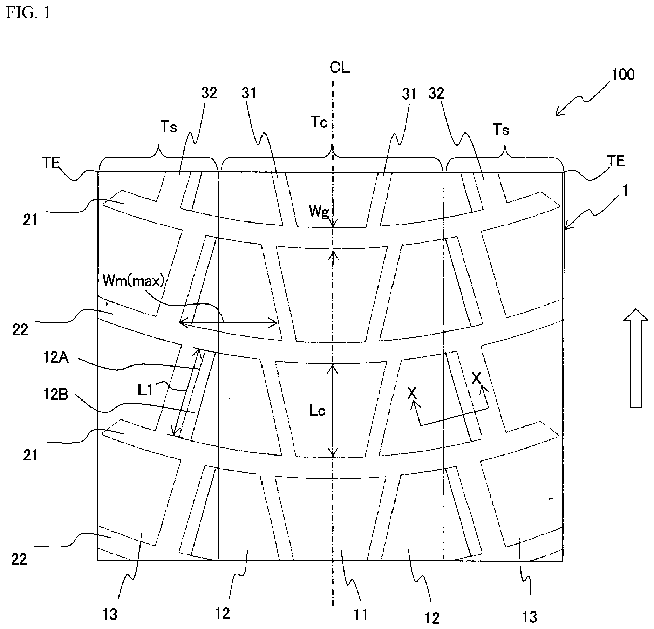

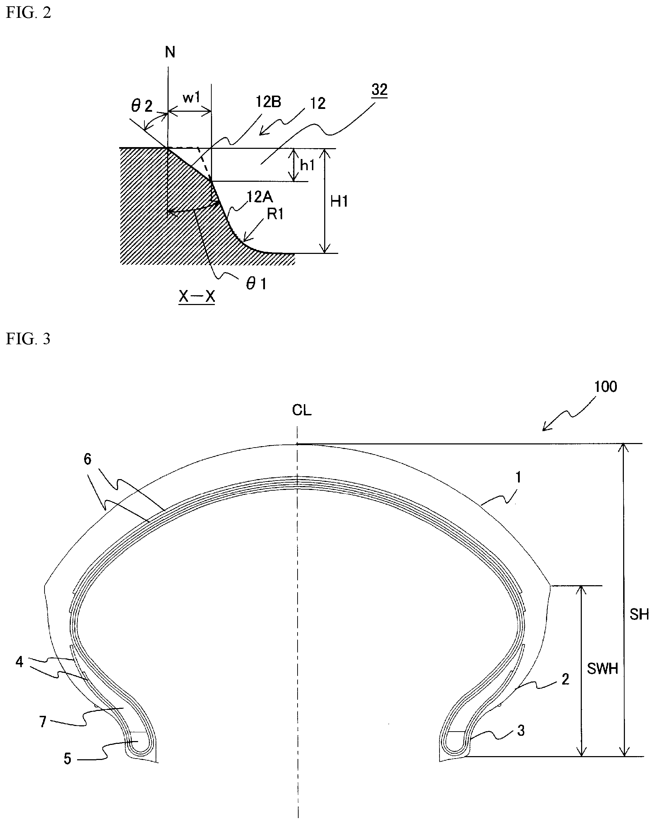

FIG. 1 shows a partial development view illustrating a tread ground-contact surface of one example of the motorcycle tire of the present invention. FIG. 2 shows a cross-sectional view of a middle block, taken along a line X-X in FIG. 1. FIG. 3 shows a widthwise cross-sectional view illustrating one example of the motorcycle tire of the present invention. The arrow in FIG. 1 indicates the tire rotation direction.

As illustrated, a motorcycle tire 100 of the present invention includes: a tread portion 1 which forms a ground-contact part; and a pair of side wall portions 2 and bead portions 3, each extending from the respective ends of the tread portion 1 toward the tire radial-direction inner side. Further, in the motorcycle tire 100 of the present invention, the tread ground-contact surface is provided with a tread pattern that includes plural blocks 11 and 12.

In the present invention, in a tire widthwise cross-section of the tread portion 1, regions obtained by bisecting a tread half-width region measured along the tire surface from a tire equator CL to a tread ground-contact end TE are each defined as a tread center portion Tc and a tread shoulder portion Ts from the side of the tire equator CL. In other words, when the distance between the tread ground-contact ends TE, which is measured along the tire surface, is defined as a tread width TW, the tread center portion Tc is a region that has 1/2 of the tread width TW with its center being the tire equator CL, while the tread shoulder portion Ts is a pair of regions that are positioned on the tire width-direction outer sides of the tread center portion Tc and have 1/4 of the tread width TW on each side.

The motorcycle tire 100 of the present invention is characterized in that, when, among the plural blocks arranged on the tread ground-contact surface, a block whose outer wall surface 12A on the tire width-direction outer side is positioned in the tread shoulder portion Ts is defined as middle block 12, an upper end portion of this middle block 12 is chamfered only for the outer wall surface 12A and a chamfered part 12B is thereby formed on the middle block 12 as illustrated in FIGS. 1 and 2.

As described above, a motorcycle makes turns by tilting the vehicle body and, during turning, the tires of the motorcycle come into contact with the ground via the tread shoulder portion Ts. Accordingly, in the present invention, the chamfered part 12B is formed in an upper end portion of the outer wall surface 12A for the middle block 12 whose shoulder-side edge, i.e. the outer wall surface 12A on the tire width-direction outer side, is positioned in the tread shoulder portion Ts serving as a ground-contact surface during turning, whereby deformation of the middle block 12 during turning can be inhibited, so that uneven wear of the upper end portion of the outer wall surface 12A can be inhibited while maintaining a turning force, and the tire durability can thus be improved.

In the present invention, the reason why only an upper end portion of the outer wall surface 12A is chamfered in the upper end portion of the middle block 12 is because, while it is effective to chamfer the outer wall surface 12A positioned on the tire width-direction outer side for the inhibition of deformation of the block during turning, chamfering of the upper end portion of the middle block 12 other than the upper end portion of the outer wall surface 12 A does not provide any further effect of inhibiting uneven wear, but rather reduces the edge effect of the block and thus may deteriorate the braking performance and the traction performance.

In the motorcycle tire 100 of the present invention, the above-described effect of inhibiting uneven wear can be obtained as long as the chamfered part 12B is formed in an upper end portion of the outer wall surface 12A of the middle block 12. The conditions of the chamfered part 12B are preferably as follows.

As for the shape of the chamfered part 12B, in the example illustrated in FIG. 2, the chamfered part 12B is planarly formed in such a manner to have a linear cross-section; however, the shape of the chamfered part 12B is not limited thereto, and the chamfered part 12B may be formed in such a manner to have a curved shape, for example, a substantially arc shape, that protrudes to the outer side in a cross-section.

As for the depth of the chamfered part 12B, when the height of the middle block 12 and that of the chamfered part 12B are defined as H1 and h1, respectively, the height h1 is preferably 2/3 or less of the height H1, more preferably in a range of 1/10 to 6/10 of the height H1. By controlling the ratio of the height h1 of the chamfered part 12B with respect to the height H1 of the middle block 12 to be in the above-described range, the above-described effect of inhibiting uneven wear can be sufficiently obtained.

A width w1 of the chamfered part 12B is in a range of 3 to 20%, preferably in a range of 5 to 15%, of a maximum value Wm(max) of the tire-width-direction length of the middle block 12. By controlling the ratio of the width w1 of the chamfered part 12B with respect to the maximum value of the tire-width-direction length of the middle block 12 to be in the above-described range, the above-described effect of inhibiting uneven wear can be sufficiently obtained. It is noted here that the width of the chamfered part 12B may be the same or vary throughout the upper end portion of the outer wall surface 12A of the middle block 12.

Further, a length L1 of the upper end portion to be chamfered on the outer wall surface 12A of the middle block 12 is usually in a range of 10 mm to 80 mm, preferably in a range of 25 mm to 60 mm. The "length L1" of the upper end portion of the outer wall surface 12A of the middle block 12 means a hypothetical length of the upper end portion in an unchamfered state.

Moreover, as for the angle of the chamfered part 12B, as illustrated in FIG. 2, when the inclination angle of the outer wall surface 12A of the middle block 12 with respect to the tire normal direction N is defined as θ1 while the inclination angle of the chamfered part 12B with respect to the tire normal direction N is defined as θ2, the values of θ1 and θ2 preferably satisfy θ1 < θ2. By arranging the chamfered part 12B at such an angle, the above-described effect of inhibiting uneven wear can be sufficiently obtained. It is noted here that, as illustrated, the outer wall surface 12A of the middle block 12 and the bottom surface of a circumferential groove 32 can be connected via a curved portion that has a radius of curvature R1.

In the motorcycle tire 100 of the present invention, the middle block 12 may be any block as long as the outer wall surface 12A on the tire width-direction outer side is positioned in the tread shoulder portion Ts serving as a ground-contact surface during turning. In the illustrated example, plural middle blocks 12 of a single kind that have substantially the same shape are arranged at the same position in the tire width direction along the tire circumferential direction with each middle block 12 being sandwiched by widthwise grooves 21 and 22; however, two or more kinds of middle blocks having different shapes may be arranged, and the positions of the middle blocks in the tire width direction may vary along the tire circumferential direction.

In the motorcycle tire 100 of the present invention, specific shapes, dimensions, and arrangement conditions of the plural blocks 11 and 12 arranged on the tread ground-contact surface are not particularly limited.

For example, with regard to the shape of the blocks, in the illustrated example, all of the center blocks 11 positioned on the tire equator CL and the middle blocks 12 whose outer wall surface 12A on the tire width-direction outer side is arranged in the tread shoulder portion Ts have a substantially trapezoidal shape partitioned by curved widthwise grooves 21 and 22 and circumferential grooves 31 and 32 extending substantially in the tire circumferential direction. By controlling the blocks to have a substantially polygonal shape formed by linear parts and/or curved parts, such as the illustrated substantially trapezoidal shape, the drainage performance and the edge effect can be effectively ensured, which is preferred.

In the present invention, the blocks may have any shape as long as a block whose outer wall surface positioned on the tire width-direction outer side is arranged in the tread shoulder portion Ts is used as a middle block and an upper end portion of the outer wall surface is chamfered for this middle block. The outer wall surface of the block may be constituted by one or more linear parts and/or curved parts.

Specific dimensions of the middle block 12 varies depending on the tire size; however, the tire-circumferential-direction length Lm is preferably in a range of 26 mm to 41 mm, and the tire-width-direction length Wm is preferably in a range of 15 mm to 44 mm. By controlling the dimensions of the middle block 12 to be in these ranges, the on-road straight running stability and traction performance can be improved. It is noted here that the above-described tire-circumferential-direction length Lm and tire-width-direction length Wm both mean a maximum value in the middle block 12.

As an arrangement condition of the plural blocks 11 and 12, when, regarding the plural blocks, a ratio between an average value Lc of the tire-circumferential-direction length of the center blocks 11 positioned on the tire equator CL, which is measured on the tire equator CL, and an average value Wg of the width of the widthwise grooves 21 and 22 separating the center blocks 11, which is measured on the tire equator, is defined as Lc/Wg, the value of this ratio Lc/Wg is preferably 550% or less in percentage. By controlling the ratio of the circumferential length of the blocks with respect to the width of the widthwise grooves to satisfy this range, an effect of improving the on-road straight running stability can be obtained, which is preferred. The value of the ratio Lc/Wg is more preferably 200 to 550%.

In the motorcycle tire 100 of the present invention, the dimensions of the grooves partitioning the plural blocks 11 and 12 can be set as appropriate in accordance with the tire size and are not particularly limited.

For example, the widthwise grooves 21 and 22 have a width of preferably 4 mm to 13 mm and a depth of preferably 0.6 mm to 12 mm. In the present invention, the widthwise grooves are not limited to a mode in which, as illustrated, they continuously extend in a curved shape to the tread ground-contact end TE or to the vicinity of the tread ground-contact end TE on both sides of the tire width direction, and may continuously extend in a straight line, or in a zigzag shape formed by linear parts or curved parts. In a case where the widthwise grooves continuously extend in a curved shape as illustrated, the radius of curvature R of the curved widthwise grooves based on the tire equator CL may be, for example, 80 mm to 400 mm, and it is preferably 120 mm to 370 mm. It is noted here that, in the illustrated example, the widthwise grooves 21 and 22 are formed in a curved shape having a center of curvature on the leading side of the tire rotation direction.

Further, the circumferential grooves 31 and 32 have a width of preferably 4 mm to 13 mm and a depth of preferably 0.6 mm to 12 mm. In the present invention, the "circumferential grooves" refer to grooves that have an extending direction at an angle in a range of -45° to 45° with respect to the tire circumferential direction. The circumferential grooves are not limited to a mode in which, as illustrated, they extend in a zigzag shape formed by linear parts, and may have a curved part, or continuously extend in a straight line or a curved shape. **In** the illustrated example, two circumferential grooves 31 and two circumferential grooves 32 are arranged; however, in the present invention, the number of circumferential grooves is also not particularly limited.

The illustrated pattern is line-symmetric about the tire equator CL; however, the present invention is not limited to this pattern. **In** the illustrated pattern, a shoulder land portion 13, which is partitioned by the widthwise grooves 21 and 22 and the circumferential groove 32, is arranged on the tire width-direction outer side of each middle block 12; however, the shape of this shoulder land portion 13 is also not particularly limited.

The motorcycle tire 100 of the present invention has a negative ratio of preferably less than 70%, more preferably in a range of 10 to 60%, particularly preferably in a range of 20 to 50%. By controlling the negative ratio to be in this range, the ground-contact surface is ensured to have good rigidity, so that the steering stability and the ride comfort can be maintained in a favorable manner. The term "negative ratio" used herein is a ratio of the area of grooves with respect to the area of tread surface assumed to have no groove, which means a ratio of grooves excluding sipes that accounts for the area of the tread ground-contact surface.

The motorcycle tire 100 of the present invention may be any tire as long as it satisfies the above-described conditions with regard to the tread pattern on the tread ground-contact surface. Other details and the like of tire structure and materials to be used are not particularly limited, and the motorcycle tire 100 of the present invention may be configured as follows.

The illustrated motorcycle tire 100 has, as its skeleton, two carcass plies 4 which toroidally extend between a pair of bead portions 3. In the present invention, the carcass plies 4 may be formed by arranging relatively high-elasticity textile cords in parallel to one another, and the number of the carcass plies 4 may be at least one, and may be three or more. Further, in the bead portions 3, the ends of each carcass ply 4 may be folded around the respective bead cores 5 from the inside to the outside of the tire and thereby anchored as illustrated, or may be sandwiched by bead wires from both sides and thereby anchored, and either of these fixation methods may be employed.

In the illustrated motorcycle tire 100, two belt layers 6 are arranged on the tire radial-direction outer side of the carcass plies 4 in the tread portion 1. In the present invention, at least one belt layer 6 may be arranged, and the belt layer 6 may be composed of two or more inclined belt layers that are arranged such that their cord directions intersect with each other between the layers, or may one or more spiral belts each composed of a rubber-coated cord spirally wound along the tire circumferential direction. Examples of a reinforcing material constituting the belt layers 6 include nylon fibers, aromatic polyamides (trade name: KEVLAR), and steel. Thereamong, aromatic polyamides and steel are reinforcing materials that do not elongate even at a high temperature and are thus capable of inhibiting swelling of the tread portion.

Further, in the motorcycle tire 100 of the present invention, bead fillers 7 may be arranged on the tire radial-direction outer side of the respective bead cores 5, and an inner liner (not illustrated) may be arranged as the innermost layer of the tire.

Moreover, in the motorcycle tire 100 of the present invention, a ratio of a tire maximum-width-position height SWH with respect to a tire cross-sectional height SH is preferably in a range of 40% to 75%. By controlling the ratio SWH/SH of the tire cross-sectional height SH and the tire maximum-width-position height SWH to be in a range of 40% to 75% in percentage, the tire can be provided with an appropriate ground-contact surface and excellent steering stability. In addition, particularly during cornering of a motorcycle, the steering stability in a banked state can be improved. It is noted here that the "tire cross-sectional height SH" refers to 1/2 of the difference between the outer diameter of the tire and the diameter of a rim defined by the above-described industrial standard.

The motorcycle tire 100 of the present invention can be applied as both a front tire and a rear tire of a motorcycle, and may be applied as a tire having either a radial structure or a bias structure.

The motorcycle tire 100 of the present invention not only exhibits excellent drainage performance on paved roads since it has a tread pattern that includes the plural blocks 11 and 12, but also is excellent in traction performance and braking performance because of the edge effect exerted by the blocks 11 and 12; therefore, the motorcycle tire 100 of the present invention is useful particularly for on-road motorcycles mainly driven on paved roads.

### DESCRIPTION OF SYMBOLS

1: tread portion
2: side wall portion
3: bead portion
4: carcass ply
5: bead core
6: belt layer
7: bead filler
11: center block
12: middle block
12A: outer wall surface
12B: chamfered part
13: shoulder land portion
21, 22: widthwise groove
31, 32: circumferential groove
100: motorcycle tire

## Claims

1. A motorcycle tire (100), comprising plural blocks (11, 12) arranged on a tread ground-contact surface,
wherein, in a tire widthwise cross-section of a tread portion (1), when regions obtained by bisecting a tread half-width region measured along the tire surface from a tire equator (CL) to a tread ground-contact end (TE) are each defined as a tread center portion (Tc) and a tread shoulder portion (Ts), a middle block (12) among the plural blocks, whose outer wall surface (12A) on the tire width-direction outer side is positioned in the tread shoulder portion (Ts), is configured such that an upper end portion is chamfered only for the outer wall surface (12A) and a chamfered part (12B) is thereby formed on the middle block (12), and
wherein the chamfered part (12B) has a width (w1) in a range of 3 to 20% of a maximum value (Wm(max)) of the tire-width-direction length of the middle block (12).

2. The motorcycle tire (100) according to claim 1, wherein, when the height of the middle block (12) and that of the chamfered part (12B) are defined as H1 and h1, respectively, the height h1 is 2/3 or less of the height H1.

3. The motorcycle tire (100) according to claim 1 or 2, wherein, among the plural blocks, center blocks (11) positioned on the tire equator (CL) have a ratio Lc/Wg, which is a ratio between an average value Lc of the tire-circumferential-direction length measured on the tire equator (CL) and an average value Wg of the width of widthwise grooves separating the center blocks (11) measured on the tire equator (CL), of 550% or less.

4. The motorcycle tire (100) according to any one of claims 1 to 3, wherein the middle block (12) has a tire-circumferential-direction length (Lm) in a range of 26 mm to 41 mm.

5. The motorcycle tire (100) according to any one of claims 1 to 4, wherein the middle block (12) has a tire-width-direction length (Wm) in a range of 15 mm to 44 mm.

6. The motorcycle tire (100) according to any one of claims 1 to 5, wherein the upper end portion of the outer wall surface (12A) of the middle block (12) has a length (L1) in a range of 10 mm to 80 mm.

7. The motorcycle tire (100) according to any one of claims 1 to 6, having a negative ratio of less than 70%.

## Patentansprüche

1. Motorradreifen (100), der mehrere Blöcke (11, 12) umfasst, die auf einer Lauffläche mit Bodenkontaktoberfläche angeordnet sind,
wobei in einem Reifenbreitenquerschnitt eines Laufflächenabschnitts (1), wenn Bereiche, die durch Halbierung eines entlang der Reifenoberfläche vom Reifenäquator (CL) bis zum Laufflächen-Bodenkontaktende (TE) gemessenen Laufflächenhalbbreitenbereichs erhalten werden, jeweils als Laufflächenmittelbereich (Tc) und Laufflächenschulterbereich (Ts) definiert sind, ein Mittelblock (12) unter den mehreren Blöcken, dessen Außenwandoberfläche (12A) auf der Außenseite in Reifenbreitenrichtung im Laufflächenschulterbereich (Ts) positioniert ist, so konfiguriert ist, dass ein oberer Endbereich nur für die Außenwandoberfläche (12A) abgeschrägt ist und dadurch ein abgeschrägter Teil (12B) am Mittelblock (12) ausgebildet wird, und
wobei der abgeschrägte Teil (12B) eine Breite (w1) in einem Bereich von 3 bis 20 % eines Maximalwerts (Wm(max)) der Reifenbreitenrichtungslänge des Mittelblocks (12) aufweist.

2. Motorradreifen (100) nach Anspruch 1, wobei, wenn die Höhe des Mittelblocks (12) und die des abgeschrägten Teils (12B) jeweils als **H1** und h1 definiert sind, die Höhe h1 2/3 oder weniger der Höhe **H1** beträgt.

3. Motorradreifen (100) nach Anspruch 1 oder 2, wobei unter den mehreren Blöcken die auf dem Reifenäquator (CL) angeordneten Mittelblöcke (11) ein Verhältnis Lc/Wg aufweisen, was ein Verhältnis zwischen einem Mittelwert Lc der Reifenumfangsrichtungslänge, die am Reifenäquator (CL) gemessen ist, und einem Mittelwert Wg der Breite der die Mittelblöcke (11) trennenden Breitenrillen, die am Reifenäquator (CL) gemessen ist, von 550 % oder weniger ist.

4. Motorradreifen (100) nach einem der Ansprüche 1 bis 3, wobei der Mittelblock (12) eine Reifenumfangsrichtungslänge (Lm) im Bereich von 26 mm bis 41 mm aufweist.

5. Motorradreifen (100) nach einem der Ansprüche 1 bis 4, wobei der Mittelblock (12) eine Reifenbreitenrichtungslänge (Wm) im Bereich von 15 mm bis 44 mm aufweist.

6. Motorradreifen (100) nach einem der Ansprüche 1 bis 5, wobei der obere Endabschnitt der Außenwandoberfläche (12A) des Mittelblocks (12) eine Länge (L1) im Bereich von 10 mm bis 80 mm aufweist.

7. Motorradreifen (100) nach einem der Ansprüche 1 bis 6, aufweisend ein negatives Verhältnis von weniger als 70 %.

## Revendications

1. Pneu de moto (100), comprenant plusieurs blocs (11, 12) agencés sur une surface de contact au sol de bande de roulement,
dans lequel, dans une section transversale en largeur de pneu d'une portion de bande de roulement (1), lorsque des régions obtenues en bissectant une région de demi-largeur de bande de roulement mesurée le long de la surface de pneu depuis un équateur de pneu (CL) jusqu'à une extrémité de contact au sol de bande de roulement (TE) sont définies chacune comme une portion centrale de bande de roulement (Tc) et une portion d'épaulement de bande de roulement (Ts), un bloc intermédiaire (12) parmi les plusieurs blocs, dont la surface de paroi extérieure (12A) du côté extérieur dans le sens de la largeur de pneu est positionnée dans la portion d'épaulement de bande de roulement (Ts), est configuré de telle sorte qu'une portion d'extrémité supérieure soit chanfreinée uniquement pour la surface de paroi extérieure (12A) et qu'une partie chanfreinée (12B) soit ainsi formée sur le bloc intermédiaire (12), et
dans lequel la partie chanfreinée (12B) présente une largeur (w1) dans une plage de 3 à 20 % d'une valeur maximale (Wm(max)) de la longueur dans le sens de la largeur de pneu du bloc intermédiaire (12).

2. Pneu de moto (100) selon la revendication 1, dans lequel, lorsque la hauteur du bloc intermédiaire (12) et celle de la partie chanfreinée (12B) sont respectivement définies comme H1 et h1, la hauteur h1 est 2/3 ou moins de la hauteur H1.

3. Pneu de moto (100) selon la revendication 1 ou 2, dans lequel, parmi les plusieurs blocs, des blocs centraux (11) positionnés sur l'équateur de pneu (CL) présentent un rapport Lc/Wg, qui est un rapport entre une valeur moyenne Lc de la longueur dans le sens circonférentiel de pneu mesurée sur l'équateur de pneu (CL) et une valeur moyenne Wg de la largeur de rainures en largeur séparant les blocs centraux (11) mesurée sur l'équateur de pneu (CL), de 550 % ou moins.

4. Pneu de moto (100) selon l'une quelconque des revendications 1 à 3, dans lequel le bloc intermédiaire (12) présente une longueur dans le sens circonférentiel de pneu (Lm) dans une plage de 26 mm à 41 mm.

5. Pneu de moto (100) selon l'une quelconque des revendications 1 à 4, dans lequel le bloc intermédiaire (12) présente une longueur dans le sens de la largeur de pneu (Wm) dans une plage de 15 mm à 44 mm.

6. Pneu de moto (100) selon l'une quelconque des revendications 1 à 5, dans lequel la portion d'extrémité supérieure de la surface de paroi extérieure (12A) du bloc intermédiaire (12) présente une longueur (L1) dans une plage de 10 mm à 80 mm.

7. Pneu de moto (100) selon l'une quelconque des revendications 1 à 6, présentant un rapport négatif de moins de 70 %.
